# EUROPÄISCHE PATENTSCHRIFT

(11) **EP 0 883 789 B1**
(45) Veröffentlichungstag und Bekanntmachung des Hinweises auf die Patenterteilung: **28.11.2001**
(21) Anmeldenummer: 97915361.6
(22) Anmeldetag: 12.03.1997
(51) Int. Cl.: F42B 3/103, F42B 3/188

(54) **GASGENERATOR, INSBESONDERE FÜR GURTSTRAFFER**
GAS GENERATOR, IN PARTICULAR FOR BELT TIGHTENERS
GENERATEUR DE GAZ, NOTAMMENT POUR PRETENSIONNEURS DE CEINTURE

(30) Priorität: 14.03.1996 DE 19609908
(43) Veröffentlichungstag der Anmeldung: 16.12.1998
(73) Patentinhaber: Dynamit Nobel GmbH Explosivstoff- und Systemtechnik, 53840 Troisdorf (DE)
(72) Erfinder: BORNHEIM, Wilhelm, D-53842 Troisdorf (DE); FABER, Günther, D-53721 Siegburg (DE); HEINEMEYER, Friedrich, D-53721 Siegburg (DE); ZÖLLNER, Helmut, D-40670 Meerbusch (DE)
(74) Vertreter: Scherzberg, Andreas, Dr.
(86) Internationale Anmeldenummer: EP9701249
(87) Internationale Veröffentlichungsnummer: WO9734121

(56) Entgegenhaltungen:
- GB-A- 2 083 174
- US-A- 2 695 562
- US-A- 3 318 243
- US-A- 4 517 895

## Beschreibung

Die Erfindung betrifft einen Gasgenerator, insbesondere für Gurtstraffer, nach dem Oberbegriff des Anspruchs 1.

Aus der DE 43 07 774 A1 sind Druckeiemente für den Einsatz in Gurtstraffern von Kraftfahrzeugen bekannt. Unter Gurtstraffern werden allgemein Schloßstraffer oder Gurtaufroller verstanden. Diese Druckelemente, im nachfolgenden als Gasgeneratoren bezeichnet, bestehen aus einem Gehäuse, in dem u. a. eine Treibladung zur Erzeugung eines Druckgases und ein Anzünder angeordnet sind. Zur Verbesserung der Anzündung kann auch noch zusätzlich eine Übertragungsladung zwischen Anzünder und Treibladung vorgesehen werden. Der Anzünder bzw. das Anzündelement ist mit einer Buchse versehen. Das Gehäuse umgreift diese Buchse bzw. ein zusätzliches Teil und drückt dieses dichtend gegen die Gehäusewand. Von außen wird zur elektrischen Ankopplung ein Stecker in die Buchse gesteckt. Über den Stecker wird so der Anzünder mit einem sich außerhalb des Gasgenerators befindlichen Steuergerät elektrisch verbunden.

Es ist auch bekannt, in den Stecker einen Schutz gegen elektromagnetische Einwirkung zu integrieren.

Nachteilig an diesem Druckelement bzw. Gasgenerator ist seine relativ aufwendige Montage. Die Verwendung einer Buchse/Stecker-Kombination begrenzt den minimalen Durchmesser des Gasgenerators.

Der Erfindung liegt die Aufgabe zugrunde, einen Gasgenerator nach dem Oberbegriff des Anspruchs 1 so weiterzubilden, daß er mit geringem Durchmesser herzustellen ist.

Erfindungsgemäß wird diese Aufgabe dadurch gelöst,
- daß der Anzünder (2) einteilig mit dem Gasgenerator ausgebildet ist,
- daß die elektrische Ankopplung über Anschlußdrähte oder Stifte bzw. Kabel erfolgt, die über einen Stopfen in das Gehäuse eingeführt und durch diesen abgedichtet werden und
- daß der Stopfen dichtend vom Gehäuse selbst oder einem mit dem Gehäuse dichtend verbundenen Halteelement umgeben ist.

Die Verwendung von Anschlußdrähten oder Stiften bzw. Kabel, die über einen Stopfen in das Innere des Gehäuses eingeführt werden, vereinfacht wesentlich die Abdichtung des Gasgenerators, da der Stopfen zugleich zur Abdichtung verwendet wird.

Bevorzugt besteht der Stopfen aus einem Synthese-Kautschuk oder Kunststoff. Beispielhafte Materialien sind Styrol-Butadien-Kautschuk (SBR), Acryl-Nitril-Kautschuk (NBR) oder Fluor-Kautschuk (FPM). Die Verbindung des Stopfens mit dem Gehäuse erfolgt durch geeignete Maßnahmen, wie Anwürgung (Crimpung), Kleben oder Vergießen. Die Anwürgung (Crimpung) hat sich als besonders vorteilhaft erwiesen.

Der Stopfen ist bevorzugt auf die Anschlußdrähte oder Stifte bzw. das Kabel aufgeschoben, angespritzt oder aufvulkanisiert.

Als Verbindungselement zwischen dem Anzünder und den Anschlußdrähten oder Stiften können zweckmäßigerweise elektonische Bauelemente oder eine Platine im Inneren des Gehäuses angeordnet werden. Auf der Platine können zur Erzeugung eines Schutzes gegen elektromagnetische Einwirkung geeignete elektronische Bauelemente oder aktive oder passive Schaltungen angeordnet sein. Ebenso kann das elektronische Verbindungselement als Schalter oder Sicherungselement ausgebildet sein.

In einer alternativen zweckmäßigen Ausführungsform ist der Anzünder direkt mit den Anschlußdrähten oder Stiften verbunden. Hierbei ist es vorteilhaft, in den Anzünder einen Schutz gegen elektromagnetische Einwirkung und/oder einen Schalter und/oder ein Sicherungselement zu integrieren.

Die Art oder die Form des Anzünders ist nicht vorgegeben. Anzündpillen sind auf jeden Fall bestens geeignet. Bevorzugt sind Anzündpillen in Lamellenform oder mit kupferkaschiertem Polkörper, der zur Aufnahme von elektronischen Bauelementen verwendbar ist. Anzündpillen sind z. B. in der DE 42 36 729 A1 beschrieben.

Zum Elektrostatikschutz weist vorteilhafterweise das Gehäuse im Bereich der elektrischen Zuleitungen eine nach innen gerichtete Annockung als Sollfunkenstrecke auf. Der Anzünder ist zweckmäßigerweise in einer Isolierhülse oder in einen Schutzschlauch eingebettet. Neben dem Schutz des Anzündstoffes vor elektrostatischen Entladungen ergeben sich hierdurch keine Beschädigungen durch Erschütterungen am Anzünder. Dies gilt speziell für Anzündpillen.

Um die Führung der Anschlußdrähte oder Stifte bzw. des Kabels variabel gestalten zu können, ist in bevorzugter Ausführungsform am stirnseitigen Ende des Gasgenerators, an dem die Anschlußdrähte oder Stifte bzw. das Kabel eingeführt werden, eine Kabelführung angeordnet. Diese ist vorteilhafterweise angespritzt oder schmelzgegossen.

Ferner weist das Gehäuse sinnvollerweise entweder am Boden oder an der Gehäusewand Sollbruchstellen auf.

Weitere Merkmale der Erfindung ergeben sich aus den Figuren, die nachfolgend beschrieben werden. Es zeigt:
- Fig. 1: im Schnitt eine bevorzugte Ausführungsform eines erfindungsgemäßen Gasgenerators in extrem schlanker Bauweise,
- Fig. 2: im Schnitt eine alternative Ausführungsform mit einem speziellen Halteelement,
- Fig. 3: eine Ausführungsform ähnlich der Fig. 1 mit aufgesetzter Kabelführung,
- Fig. 4: schematisch die Platine mit einer Spule,
- Fig. 5: schematisch die Platine mit einem Kondensator und
- Fig. 6: schematisch die Platine mit aktiver oder passiver Schaltung.

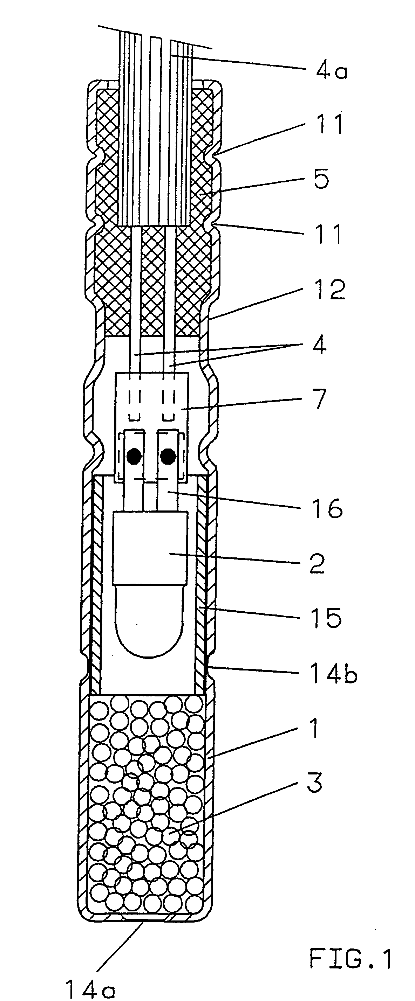

Fig. 1 zeigt einen erfindungsgemäßen Gasgenerator zur Verwendung bei Gurtstraffern. Der Gasgenerator besteht aus einem zylindrischen Gehäuse 1. An einem stirnseitigen Ende ist eine Treibladung 3 angeordnet, die nach der Anzündung durch einen Anzünder 2 Druckgas erzeugt. Vor der Treibladung 3 kann auch eine Verstärkungsladung oder Übertragungsladung vorgesehen sein. Die Treibladung kann z. B. bestehen aus Nitrocellulose oder einem nicht kohlenmonoxidhaltigen Treibstoff, wie z. B. aus der EP 0 519 485 A1 bekannt.

Vor der Treibladung 3 befindet sich der Anzünder 2, hier eine Anzündpille, die in eine Isolierhülse 15 hineinragt. Die elektrischen Anschlußlamellen 16 des Anzünders 2 sind mit einer Platine 7 verbunden, z. B. angelötet. Auf der den Anschlußlamellen 16 entgegengesetzten Seite der Platine 7 sind auf dieser Anschlußdrähte 4 eines elektrischen Kabels 4a angelötet. Die Platine 7 dient demnach als Verbindungselement zwischen Anzünder 2 und den Anschlußdrähten 4 bzw. dem Kabel 4a.

Diese Anschlußdrähte 4 bzw. das Kabel 4a sind stirnseitig aus dem Gehäuse 1 herausgeführt. Die Abdichtung erfolgt über einen Stopfen 5, durch den die Anschlußdrähte 4 bzw. das Kabel 4a geführt ist. Der Stopfen 5 füllt das stirnseitige Ende des Gehäuses 1 voll aus. Die Befestigung erfolgt durch Anwürgung (Crimpung) 11 an verschiedenen Stellen.

Durch Sollbruchstellen 14a entweder am Boden oder durch Sollbruchstellen 14b in der Gehäusewand ist ein definiertes Aufbrechen des Generators möglich.

Im Bereich der elektrischen Anschlußdrähte befindet sich im Gehäuse 1 eine nach innen gerichtete, ringförmige Annockung 12. Diese Annockung 12 dient als Elektrostatikschutz, wenn das Gehäuse 1 vorteilhafterweise aus Metall hergestellt ist.

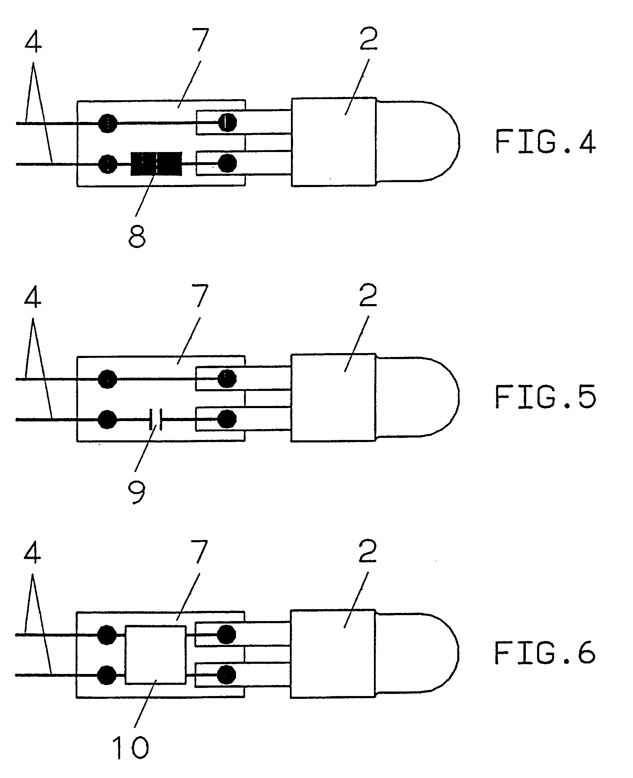

Auf der Platine ist vorteilhaft ein Schutz gegen elektromagnetische Einwirkung vorgesehen (siehe Fig. 4-6).

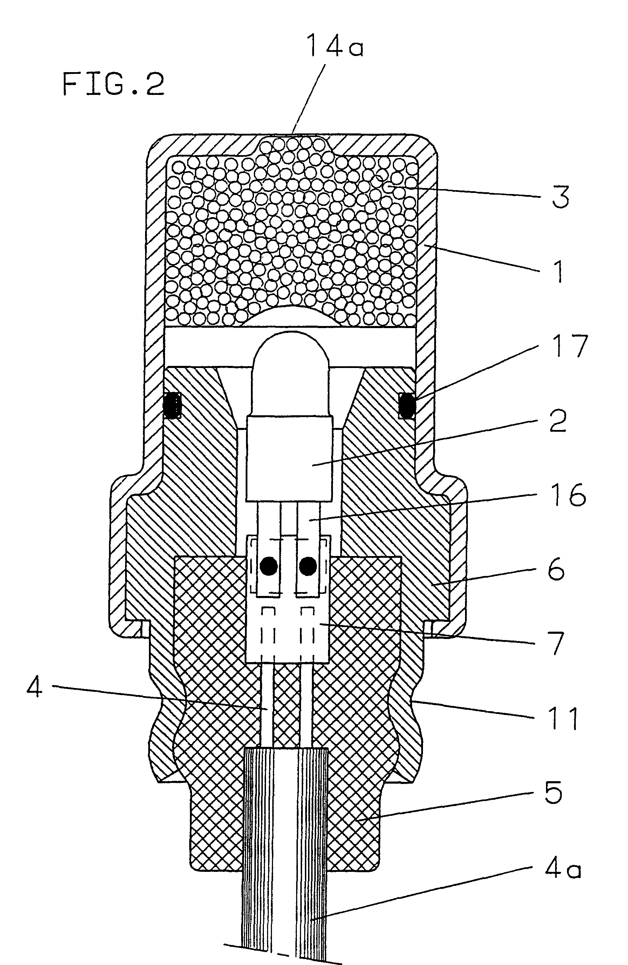

Fig. 2 zeigt eine alternative Ausführungsform des erfindungsgemäßen Gasgenerators. Der Anzünder 2, hier ebenfalls eine Anzündpille, ist in einem Halteelement 6 eingebettet. Dieses Halteelement 6 ist über einen Dichtungsring 17 gegenüber dem Gehäuse 1 abgedichtet. Im Halteelement 6 ist analog zur Ausführungsform gemäß Fig. 1 ein Stopfen 5 eingebettet, durch den das Kabel 4a geführt ist.

Mit der Bezeichnung Anschlußdrähte oder Stifte bzw. Kabel sind auch Einzeldrähte, Verbunddrähte, Litzen oder die verschiedensten Ausgestaltungen von Kabeln gemeint.

Der Stopfen 5 ist in dieser Ausführungsform demnach dichtend vom Halteelement 6 umgeben. Die Verbindung ist wieder durch eine Anwürgung bzw. Crimpung 11 erreicht. Wie in der Ausführungsform gemäß Fig. 1 ist auch hier eine Platine 7 als Verbindungselement zwischen dem Kabel 4a bzw. den Anschlußdrähten 4 und den Anschlußlamellen 16 vorgesehen. Oberhalb des Anzünders 2 ist wieder eine Treibladung 3 eingebracht. Eine Sollbruchstelle 14a sorgt für ein definiertes Aufbrechen des Gehäuses 1.

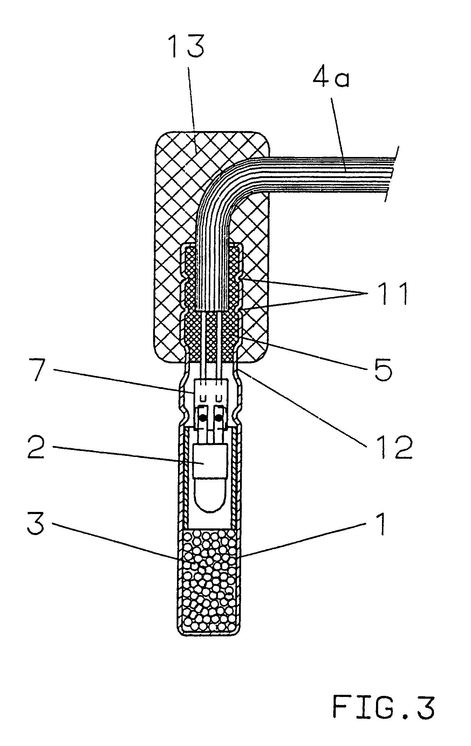

Fig. 3 zeigt eine ähnliche Ausführungsform wie Fig. 1, jedoch ist am stirnseitigen Ende des Gehäuses 1, wo das Kabel 4a eingeführt wird, eine Kabelführung 13 angebracht. Mit Hilfe dieser Kabelführung 13 kann das Kabel 4a auch in einem vorgegebenen Winkel, in der Fig. 3 sind als Beispiel 90° gezeigt, in das Gehäuse 1 eingeführt werden. Die Kabelführung 13 kann z. B. aufgesteckt, aufgeklebt oder angespritzt werden. Die Kabelführung 13 kann zusätzlich als Zugentlastung dienen.

Die Figuren 4, 5, 6 zeigen jeweils schematisch die Platine 7 mit angelöteten Anschlußdrähten 4 und Anzünder 2. Als EMV-Schutz ist in Fig. 4 eine Spule 8, in Fig. 5 ein Kondensator 9 und in Fig. 6 eine aktive oder passive Schaltung 10 auf der Platine 7 angeordnet. Diese aktive oder passive Schaltung 10 kann auch für andere Zwecke als nur für den Schutz gegen elektromagnetische Einwirkung verwendet werden, z. B. als Schalter oder als Sicherungselement.

## Patentansprüche

1. Gasgenerator, insbesondere für Gurtstraffer, mit einem Gehäuse (1) und darin angeordnetem Anzünder (2) und einer Treibladung (3) zur Erzeugung eines Druckgases und einer Ankopplung des Anzünders (2) an ein außerhalb des Gasgenerators liegendes Steuergerät, **dadurch gekennzeichnet,**
- **daß** der Anzünder (2) einteilig mit dem Gasgenerator ausgebildet ist,
- **daß** die elektrische Ankopplung über Anschlußdrähte (4) oder Stifte bzw. Kabel (4a) erfolgt, die über einen Stopfen (5) in das Gehäuse (1) eingeführt und durch diesen abgedichtet werden und
- **daß** der Stopfen (5) dichtend vom Gehäuse (1) selbst oder einem mit dem Gehäuse (1) dichtend verbundenen Halteelement (6) umgeben ist.

2. Gasgenerator nach Anspruch 1, **dadurch gekennzeichnet, daß** als Verbindungselement zwischen dem Anzünder (2) und den Anschlußdrähten (4) oder Stiften eine Platine (7) oder elektronische Bauelemente im Innern des Gehäuses (1) angeordnet sind.

3. Gasgenerator nach Anspruch 2, **dadurch gekennzeichnet, daß** auf der Platine (7) oder durch die elektronischen Bauelemente ein Schutz gegen elektromagnetische Einwirkung oder ein Schalter oder ein Sicherungselement angeordnet bzw. gebildet ist.

4. Gasgenerator nach Anspruch 1, **dadurch gekennzeichnet, daß** der Anzünder (2) direkt mit den Anschlußdrähten (4) oder Stiften verbunden ist.

5. Gasgenerator nach Anspruch 4, **dadurch gekennzeichnet, daß** in den Anzünder (2) ein Schutz gegen elektromagnetische Einwirkung oder ein Schalter oder ein Sicherungselement integriert ist.

6. Gasgenerator nach einem der Ansprüche 1 bis 5, **dadurch gekennzeichnet, daß** der Stopfen (5) mit dem Gehäuse (1) durch Anwürgung (Crimpung) (11), Kleben oder Vergießen verbunden ist.

7. Gasgenerator nach einem der Ansprüche 1 bis 6, **dadurch gekennzeichnet, daß** der Stopfen (5) auf die Anschlußdrähte (4) oder Stifte bzw. das Kabel (4a) aufgeschoben, angespritzt oder aufvulkanisiert ist.

8. Gasgenerator nach einem der Ansprüche 1 bis 7, **dadurch gekennzeichnet, daß** der Anzünder (2) eine Anzündpille ist.

9. Generator nach Anspruch 8, **dadurch gekennzeichnet, daß** die Anzündpille ein kupferkaschierter Polkörper ist, der zur Aufnahme von elektronischen Bauelementen verwendbar ist.

10. Gasgenerator nach einem der Ansprüche 1 bis 9, **dadurch gekennzeichnet, daß** das Gehäuse (1) eine nach innen gerichtete Annockung (12) als Sollfunkenstrecke aufweist.

11. Gasgenerator nach einem der Ansprüche 1 bis 10, **dadurch gekennzeichnet, daß** am stirnseitigen Ende des Gasgenerators, an dem die Anschlußdrähte (4) oder Stifte bzw. das Kabel eingeführt werden, eine Kabelführung (13) angeordnet ist.

12. Gasgenerator nach einem der Ansprüche 1 bis 11, **dadurch gekennzeichnet, daß** das Gehäuse (1) entweder am Boden oder an der Gehäusewand mit Sollbruchstellen (14a, 14b) versehen ist.

13. Gasgenerator nach einem der Ansprüche 1 bis 12, **dadurch gekennzeichnet, daß** der Stopfen (5) aus einem Synthese-Kautschuk oder Kunststoff besteht.

## Claims

1. Gas generator, in particular for belt tighteners, having a housing (1) and an igniter (2) arranged therein and a propellent charge (3) for generating a compressed gas and having a coupling coupling the igniter (2) to a control unit that is located outside the gas generator, **characterized**
- **in that** the igniter (2) is formed in one piece with the gas generator,
- **in that** the electrical coupling is effected by way of connection wires (4) or pins or cables (4a) which are inserted into the housing (1) by way of a stopper (5) and are sealed by the latter, and
- **in that** the stopper (5) is surrounded in a sealing manner by the housing (1) itself or by a holding element (6) which is connected in a sealing manner to the housing (1).

2. Gas generator according to claim 1, **characterized in that** a printed circuit board (7) or electronic components is/are arranged in the interior of the housing (1) as a connecting element between the igniter (2) and the connection wires (4) or pins.

3. Gas generator according to claim 2, **characterized in that** protection against electromagnetic action or a switch or a fuse element is arranged or formed on the printed circuit board (7) or by means of the electronic components.

4. Gas generator according to claim 1, **characterized in that** the igniter (2) is connected directly to the connection wires (4) or pins.

5. Gas generator according to claim 4, **characterized in that** protection against electromagnetic action or a switch or a fuse element is integrated into the igniter (2).

6. Gas generator according to one of claims 1 to 5, **characterized in that** the stopper (5) is connected to the housing (1) by crimping (11), adhesion or encapsulation.

7. Gas generator according to one of claims 1 to 6, **characterized in that** the stopper (5) is pushed, injection-moulded or vulcanized onto the connection wires (4) or pins or the cable (4a) respectively.

8. Gas generator according to one of claims 1 to 7, **characterized in that** the igniter (2) is an ignition cap.

9. Generator (*sic*) according to claim 8, **characterized in that** the ignition cap is a copper-clad pole body which can be used to receive electronic components.

10. Gas generator according to one of claims 1 to 9, **characterized in that** the housing (1) has an inwardly directed cam formation (12) as a predetermined spark gap.

11. Gas generator according to one of claims 1 to 10, **characterized in that** a cable guide (13) is arranged at the end of the gas generator on the face at which the connection wires (4) or pins or the cable are inserted.

12. Gas generator according to one of claims 1 to 11, **characterized in that** the housing (1) is provided with predetermined breaking points (14a, 14b) either on the base or on the housing wall.

13. Gas generator according to one of claims 1 to 12, **characterized in that** the stopper (5) is made of a synthetic rubber or plastics material.

## Revendications

1. Générateur de gaz, en particulier pour des prétensionneurs de ceinture, comportant un boîtier (1) avec un dispositif d'allumage (2) disposé à l'intérieur de celui-ci, une charge active (3) pour générer un gaz sous pression et un couplage du dispositif d'allumage (2) à un appareil de commande disposé à l'extérieur du générateur de gaz, **caractérisé en ce que**
• le dispositif d'allumage (2) est formé d'une pièce avec le générateur de gaz,
• le couplage électrique est réalisé au moyen de fils de liaison (4) ou de broches, voire de câbles (4a), qui pénètrent dans le boîtier (1) à travers un bouchon (5) et dont le montage étanche est assuré par ledit bouchon,
• le bouchon (5) est entouré de manière étanche par le boîtier (1) lui-même ou par un élément de fixation (6) lié de manière étanche au boîtier (1).

2. Générateur de gaz selon la revendication 1, **caractérisé en ce qu'**une platine (7) ou des composants électroniques sont disposés à l'intérieur du boîtier (1), en tant qu'élément de liaison entre le dispositif d'allumage (2) et les fils de liaison (4) ou les broches.

3. Générateur de gaz selon la revendication 2, **caractérisé en ce qu'**un moyen de protection contre les effets électromagnétiques ou un commutateur ou un élément de protection est disposé sur la platine (7) ou est formé par les composants électroniques.

4. Générateur de gaz selon la revendication 1, **caractérisé en ce que** le dispositif d'allumage (2) est connecté directement aux fils de liaison (4) ou aux broches.

5. Générateur de gaz selon la revendication 4, **caractérisé en ce qu'**un moyen de protection contre les effets électromagnétiques ou un commutateur ou un élément de protection est intégré dans le dispositif d'allumage (2).

6. Générateur de gaz selon une des revendications 1 à 5, **caractérisé en ce que** le bouchon (5) est lié au boîtier (1) par sertissage (11), par collage ou par moulage.

7. Générateur de gaz selon une des revendications 1 à 6, **caractérisé en ce que** le bouchon (5) est enfilé, surmoulé ou vulcanisé sur les fils de liaison (4) ou les broches, voire sur le câble.

8. Générateur de gaz selon une des revendications 1 à 7, **caractérisé en ce que** le dispositif d'allumage (2) est une pastille-amorce.

9. Générateur de gaz selon la revendication 8, **caractérisé en ce que** la pastille-amorce est un élément à pôles revêtu de cuivre, utilisable pour le montage de composants électroniques.

10. Générateur de gaz selon une des revendications 1 à 9, **caractérisé en ce que** le boîtier (1) comporte une moulure (12) rentrante comme espace de formation d'étincelle.

11. Générateur de gaz selon une des revendications 1 à 10, **caractérisé en ce qu'**une traversée de câble (13) est prévue à l'extrémité frontale du générateur de gaz où rentrent les fils de liaison (4) ou les broches, voire le câble.

12. Générateur de gaz selon une des revendications 1 à 11, **caractérisé en ce que** le boîtier (1), soit au niveau du fond, soit au niveau de la paroi de boîtier, comporte des zones de rupture.

13. Générateur de gaz selon une des revendications 1 à 12, **caractérisé en ce que** le bouchon (5) est en caoutchouc synthétique ou en matière plastique.
